# FASCICULE DE BREVET EUROPEEN

(11) **EP 2 985 644 B1**
(45) Date de publication et mention de la délivrance du brevet: **02.09.2020**
(21) Numéro de dépôt: 15180212.1
(22) Date de dépôt: 07.08.2015
(51) Int. Cl.: G02B 6/10, G02B 6/13, G02B 6/136, G02F 1/025, H01L 21/02, B82Y 20/00

(54) **PROCÉDÉ DE FABRICATION D'UN GUIDE OPTIQUE**
VERFAHREN ZUR HERSTELLUNG EINES LICHTWELLENLEITERS
METHOD FOR MANUFACTURING AN OPTICAL WAVEGUIDE

(30) Priorité: 11.08.2014 FR 1457748
(43) Date de publication de la demande: 17.02.2016
(73) Titulaire: Commissariat à l'Energie Atomique et aux Energies Alternatives, 75015 Paris (FR)
(72) Inventeur: FEDELI, Jean-Marc, 38120 Saint-Egrève (FR); ABRAHAM, Alexis, 38130 Echirolles (FR); BOGUMILOWICZ, Yann, 38100 Grenoble (FR); OLIVIER, Ségolène, 38950 Saint Martin le Vinoux (FR); MAGIS, Thomas, 38000 Grenoble (FR); BRIANCEAU, Pierre, 38330 Biviers (FR)
(74) Mandataire: Talbot, Alexandre

(56) Documents cités:
- EP-A1- 2 463 695
- FR-A1- 2 907 916
- SPOTT ALEXANDER ET AL: "Photolithographic fabrication of slot waveguides", ADVANCED FABRICATION TECHNOLOGIES FOR MICRO/NANO OPTICS AND PHOTONICS IV, SPIE, vol. 7927, no. 1, 10 février 2011 (2011-02-10), pages 1-6, XP060020624, DOI: 10.1117/12.876093
- XU Q ET AL: "Experimental demonstration of guiding and confining light in nanometer-size low-refractive-index material", OPTICS LETTERS, vol. 29, no. 14, 15 juillet 2004 (2004-07-15), pages 1626-1628, XP002417872, ISSN: 0146-9592, DOI: 10.1364/OL.29.001626

## Description

La présente invention a trait à un procédé de fabrication d'un guide optique.

Plus précisément, l'invention concerne le domaine des guides optiques à fente verticale utilisés notamment pour les modulateurs électro-optiques de type capacitif. Ces guides optiques peuvent être également utilisés notamment comme commutateurs optiques, sources de lumière ou capteurs optiques.

Ainsi, le guide optique comporte deux régions semi-conductrices cristallines séparées par une couche diélectrique, la couche diélectrique présentant une largeur prédéterminée et une épaisseur prédéterminée strictement supérieure à ladite largeur.

La couche diélectrique forme la fente verticale. Les deux régions semi-conductrices cristallines peuvent être dopées électriquement et former une capacité avec la couche diélectrique. Lorsque les deux régions semi-conductrices sont soumises à une différence de potentiel, les porteurs de charge s'accumulent aux interfaces entre la couche diélectrique et les régions semi-conductrices. Cette variation de concentration en porteurs de charge peut conduire au phénomène d'électro-réfraction, c'est-à-dire que l'indice de réfraction des régions semi-conductrices varie localement selon la différence de potentiel du champ électrique appliqué. Le champ optique est essentiellement confiné dans la couche diélectrique, ce qui permet de réduire les pertes optiques. Cette variation de l'indice de réfraction des régions semi-conductrices permet d'introduire un déphasage pour une onde électromagnétique se propageant à travers les régions semi-conductrices. Pour les modulateurs électro-optiques, une structure interférométrique est associée au guide optique pour obtenir une modulation d'intensité à partir du déphasage introduit. La structure interférométrique peut être un interféromètre de type Mach-Zehnder, Fabry-Pérot ou en anneau.

Un premier procédé de fabrication d'un guide optique connu de l'état de la technique, notamment du document FR 2 907 916, est un procédé de fabrication d'un guide optique comportant deux régions semi-conductrices cristallines séparées par une couche diélectrique, la couche diélectrique présentant une largeur prédéterminée et une épaisseur prédéterminée strictement supérieure à ladite largeur, le procédé comportant les étapes : a) prévoir un substrat comportant successivement une couche d'isolant électrique et une couche semi-conductrice cristalline, le substrat présentant une surface plane, b) former une tranchée dans la couche semi-conductrice de manière à mettre à nu la couche d'isolant électrique et délimiter des première et deuxième zones semi-conductrices de part et d'autre de la couche d'isolant électrique mise à nu, l'étape b) étant exécutée de sorte que la première zone semi-conductrice présente un bord latéral s'étendant sur toute l'épaisseur de la couche semi-conductrice et suivant un axe perpendiculaire à la surface plane du substrat, la première zone semi-conductrice étant destinée à former la première région semi-conductrice du guide optique, c) former la couche diélectrique de la largeur prédéterminée sur toute l'épaisseur du bord latéral.

Par « largeur », on entend une dimension suivant un axe parallèle au plan défini par la surface plane du substrat.

Par « épaisseur », on entend une dimension suivant un axe perpendiculaire à la surface plane du substrat.

Par « cristalline », on entend une zone ou une région dans laquelle les atomes ou les molécules sont disposés régulièrement selon un motif caractéristique, ce qui exclut donc les zones ou régions amorphes.

Par « perpendiculaire », on entend que l'angle formé entre le bord latéral et la surface plane du substrat est compris entre 85° et 95°.

La tranchée formée lors de l'étape b) est configurée pour présenter une largeur constante et égale à la largeur prédéterminée de la couche diélectrique. La couche d'isolant électrique mise à nu présente ainsi une largeur égale à la largeur prédéterminée de la couche diélectrique.

L'étape c) est exécutée par un dépôt chimique en phase vapeur assisté par plasma.

Ce premier procédé n'est pas entièrement satisfaisant dans la mesure où la couche diélectrique formée lors de l'étape c) peut comporter une bulle dès lors que le rapport entre l'épaisseur et la largeur de la couche diélectrique est supérieur à 1,5, comme précisé page 3, lignes 22 à 28. Cette bulle est fortement préjudiciable en terme de performances du guide optique, comme précisé page 3, lignes 29 à 31. En outre, lorsque ledit rapport est très supérieur à 1,5, par exemple entre 5 et 10, il est impossible de former la couche diélectrique pour défaut de remplissage, comme précisé page 4, lignes 2 à 5. Par ailleurs, l'étape b) de formation de la tranchée doit être parfaitement maîtrisée car elle détermine la largeur de la couche diélectrique.

Un deuxième procédé de fabrication d'un guide optique connu de l'état de la technique, notamment du document EP 2 463 695, est un procédé de fabrication d'un guide optique comportant deux régions semi-conductrices cristallines séparées par une couche diélectrique, la couche diélectrique présentant une largeur prédéterminée et une épaisseur prédéterminée strictement supérieure à ladite largeur, le procédé comportant les étapes : a) prévoir un substrat comportant successivement une couche d'isolant électrique et une couche semi-conductrice cristalline, le substrat présentant une surface plane, b) former une tranchée dans la couche semi-conductrice de manière à mettre à nu la couche d'isolant électrique et délimiter des première et deuxième zones semi-conductrices de part et d'autre de la couche d'isolant électrique mise à nu.

L'étape b) est suivie d'une étape de dépôt d'un matériau diélectrique sur la couche d'isolant électrique mise à nu, le matériau diélectrique déposé présentant une épaisseur égale à l'épaisseur prédéterminée de la couche diélectrique. Le matériau diélectrique déposé est ensuite gravé de manière à ne conserver qu'une fente de la largeur prédéterminée, la fente formant la couche diélectrique du guide optique.

Ce deuxième procédé n'est pas entièrement satisfaisant dans la mesure où l'obtention d'une fente fine (30 à 50 nm) nécessite plusieurs gravures du matériau diélectrique, comme précisé §0027, ce qui rend le deuxième procédé complexe à mettre en œuvre avec un allongement de la durée d'opération. Par ailleurs, les étapes de nettoyage après lesdites gravures conduisent à un contrôle imparfait de l'uniformité de l'épaisseur de la fente, le deuxième procédé n'étant pas ainsi parfaitement reproductible.

Alexander Spott et al: "Photolithographic fabrication of slot waveguides", ADVANCED FABRICATION TECHNOLOGIES FOR MICRO/NANO OPTICS AND PHOTONICS IV, vol. 7927, no. 1, décrit un procédé de fabrication d'un guide optique comportant deux régions semi-conductrices cristallines, la couche diélectrique présentant une largeur prédéterminée et une épaisseur prédéterminée supérieure à ladite largeur, le procédé comportant les étapes: a) prévoir un substrat comportant successivement une couche d'isolant électrique et une couche semi-conductrice cristalline, le substrat présentant une surface plane, b) former une tranchée dans la couche semi-conductrice de manière à mettre à nu la couche d'isolant électrique et délimiter des première et deuxième zones semi-conductrices de part et d'autre de la couche d'isolant électrique mise à nu, c) former la couche diélectrique dans la tranchée.

La présente invention vise à remédier en tout ou partie aux inconvénients précités, et concerne à cet effet un procédé de fabrication d'un guide optique comportant deux régions semi-conductrices cristallines séparées par une couche diélectrique, la couche diélectrique présentant une largeur prédéterminée et une épaisseur prédéterminée strictement supérieure à ladite largeur, le procédé comportant les étapes : a) prévoir un substrat comportant successivement une couche d'isolant électrique et une couche semi-conductrice cristalline, le substrat présentant une surface plane, b) former une tranchée dans la couche semi-conductrice de manière à mettre à nu la couche d'isolant électrique et délimiter des première et deuxième zones semi-conductrices de part et d'autre de la couche d'isolant électrique mise à nu, l'étape b) étant exécutée de sorte que la première zone semi-conductrice présente un bord latéral s'étendant sur toute l'épaisseur de la couche semi-conductrice et suivant un axe perpendiculaire à la surface plane du substrat, la première zone semi-conductrice étant destinée à former la première région semi-conductrice du guide optique, c) former la couche diélectrique de la largeur prédéterminée sur toute l'épaisseur du bord latéral, le procédé étant remarquable en ce que la tranchée formée lors de l'étape b) est configurée de sorte que la deuxième zone semi-conductrice forme une couche germe s'étendant sur une épaisseur strictement inférieure à l'épaisseur de la couche semi-conductrice, et en ce qu'il comporte une étape d) former par épitaxie la deuxième région semi-conductrice du guide optique à partir de la couche germe, l'étape d) étant exécutée après l'étape c).

Par « largeur », on entend une dimension suivant un axe parallèle au plan défini par la surface plane du substrat.

Par « épaisseur », on entend une dimension suivant un axe perpendiculaire à la surface plane du substrat.

Par « cristalline », on entend une zone ou une région dans laquelle les atomes ou les molécules sont disposés régulièrement selon un motif caractéristique, ce qui exclut donc les zones ou régions amorphes.

Par « perpendiculaire », on entend que l'angle formé entre le bord latéral et la surface plane du substrat est compris entre 85° et 95°.

Par « couche germe », on entend une couche mince formant un support de croissance épitaxiale d'un matériau cristallin.

Ainsi, un tel procédé selon l'invention permet d'éviter la formation d'une bulle à l'intérieur de la couche diélectrique par une largeur de la couche d'isolant électrique mise à nu suffisamment importante relativement à l'épaisseur de la couche germe.

En outre, la largeur de la couche diélectrique est entièrement déterminée lors de l'étape c) en l'absence de contrainte géométrique de par une épaisseur de la couche germe suffisamment faible. La largeur de la couche diélectrique n'est donc pas déterminée par la largeur de la couche d'isolant électrique mise à nu lors de l'étape b). La largeur de la couche d'isolant électrique mise à nu constitue ainsi une variable d'ajustement relativement à l'épaisseur souhaitée de la couche germe afin d'éviter la formation d'une bulle à l'intérieur de la couche diélectrique. Il est alors possible d'envisager la formation d'une couche diélectrique présentant un rapport entre l'épaisseur et la largeur très supérieur à 1,5, par exemple compris entre 17 et 50, de préférence compris entre 20 et 50, encore préférentiellement compris entre 20 et 30.

L'étape d) doit être exécutée après l'étape c) afin d'éviter la formation d'une bulle à l'intérieur de la couche diélectrique, et ce en raison de contraintes géométriques apparaissant avec l'épaisseur de la couche épitaxiée.

Par ailleurs, en l'absence d'étapes successives de gravure et de nettoyage de matériau diélectrique, un tel procédé selon l'invention permet d'obtenir une bonne uniformité de l'épaisseur et de la largeur de la couche diélectrique, et ce avec une durée d'opération restreinte.

La présente invention concerne également un procédé de fabrication d'un guide optique comportant deux régions semi-conductrices cristallines séparées par une couche diélectrique, la couche diélectrique présentant une largeur prédéterminée et une épaisseur prédéterminée strictement supérieure à ladite largeur, le procédé comportant les étapes : a) prévoir un substrat comportant successivement une couche d'isolant électrique et une couche semi-conductrice cristalline, le substrat présentant une surface plane, le substrat étant à base d'un matériau semi-conducteur cristallin, b) éliminer une partie de la couche semi-conductrice de manière à mettre à nu la couche d'isolant électrique et délimiter une unique zone semi-conductrice d'un côté de la couche d'isolant électrique mise à nu, l'étape b) étant exécutée de sorte que la zone semi-conductrice présente un bord latéral s'étendant sur toute l'épaisseur de la couche semi-conductrice et suivant un axe perpendiculaire à la surface plane du substrat, la zone semi-conductrice étant destinée à former la première région semi-conductrice du guide optique, c) former la couche diélectrique de la largeur prédéterminée sur toute l'épaisseur du bord latéral, c1) former au moins une tranchée dans la couche d'isolant électrique mise à nu de manière à mettre à nu le substrat, d) former par épitaxie la deuxième région semi-conductrice du guide optique à partir du substrat mis à nu, l'étape d) étant exécutée après l'étape c).

Par « largeur », on entend une dimension suivant un axe parallèle au plan défini par la surface plane du substrat.

Par « épaisseur », on entend une dimension suivant un axe perpendiculaire à la surface plane du substrat.

Par « cristalline », on entend une zone ou une région dans laquelle les atomes ou les molécules sont disposés régulièrement selon un motif caractéristique, ce qui exclut donc les zones ou régions amorphes.

Par « perpendiculaire », on entend que l'angle formé entre le bord latéral et la surface plane du substrat est compris entre 85° et 95°.

Ainsi, un tel procédé selon l'invention permet d'éviter la formation d'une bulle à l'intérieur de la couche diélectrique car la couche diélectrique est formée lors de l'étape c) en l'absence de zone semi-conductrice en regard de l'unique zone semi-conductrice délimitée lors de l'étape b). Plus précisément, il n'existe pas de zone semi-conductrice en regard de l'unique zone semi-conductrice suivant la largeur du guide optique.

En outre, la largeur de la couche diélectrique est entièrement déterminée lors de l'étape c) en l'absence de contrainte géométrique de par l'absence de zone semi-conductrice en regard de l'unique zone semi-conductrice délimitée lors de l'étape b). Il est alors possible d'envisager la formation d'une couche diélectrique présentant un rapport entre l'épaisseur et la largeur très supérieur à 1,5, par exemple compris entre 17 et 50, de préférence compris entre 20 et 50, encore préférentiellement compris entre 20 et 30.

Par ailleurs, en l'absence d'étapes successives de gravure et de nettoyage de matériau diélectrique, un tel procédé selon l'invention permet d'obtenir une uniformité de l'épaisseur et de la largeur de la couche diélectrique, et ce avec une durée d'opération restreinte.

Il est à noter que les étapes c) et c1) peuvent être interverties indifféremment. En revanche, l'étape d) doit être exécutée après l'étape c) afin d'éviter la formation d'une bulle à l'intérieur de la couche diélectrique, et ce en raison de contraintes géométriques apparaissant avec l'épaisseur de la couche épitaxiée.

Le concept inventif commun entre les deux procédés selon l'invention est la formation de la couche diélectrique lors de l'étape c) en l'absence de contraintes géométriques, soit par une épaisseur de la couche germe suffisamment faible, soit par l'absence de zone semi-conductrice en vis-à-vis suivant la largeur du guide optique. Un tel concept permet d'envisager un rapport entre l'épaisseur et la largeur de la couche diélectrique très supérieur à 1,5. Par ailleurs, en l'absence d'étapes successives de gravure et de nettoyage d'un matériau diélectrique, un tel concept permet d'obtenir une uniformité de l'épaisseur et de la largeur de la couche diélectrique, et ce avec une durée d'opération restreinte.

Selon un mode de mise en œuvre, l'étape b) est exécutée par une gravure de la couche semi-conductrice adaptée pour former la couche germe et une partie du bord latéral de la première zone semi-conductrice, ladite gravure comprenant une surgravure de la couche semi-conductrice adaptée pour mettre à nu la couche d'isolant électrique et délimiter la couche germe de la première zone semi-conductrice, la surgravure terminant la formation du bord latéral de la première zone semi-conductrice.

Selon une forme d'exécution, la gravure de la couche semi-conductrice est une gravure ionique réactive adaptée pour privilégier une gravure anisotrope, la surgravure de la couche semi-conductrice étant obtenue par une incidence oblique d'un flux ionique.

Par « privilégier », on entend que les paramètres de la gravure ionique réactive tels que la pression, la puissance, la température et la tension de polarisation sont choisis de manière à privilégier la gravure au plasma anisotrope vis-à-vis de la gravure sèche chimique isotrope. Par exemple, une faible tension de polarisation, des pression et température élevées permettent de privilégier la gravure chimique sèche. En revanche, une tension de polarisation élevée, une faible pression permettent de privilégier une gravure au plasma en favorisant le bombardement ionique mécanique. Les termes « élevé » et « faible » s'apprécient par l'homme du métier notamment en fonction du matériau à graver et des gaz réactifs choisis pour le plasma.

En notant Z'-Z l'axe perpendiculaire à la surface plane du substrat, par « oblique », on entend une direction qui n'est pas parallèle à l'axe Z'-Z.

Ainsi, le choix de la gravure ionique réactive permet d'exécuter l'étape b) au sein d'un unique bâti. En outre, la surgravure obtenue réalise une tranchée, et est connue sous le nom de « trenching » en langue anglaise, décrite par exemple dans le livre intitulé « Plasma Etching in Microelectronics », N. Layadi et al., 2001. La topographie de l'objet gravé conduit à une incidence oblique d'un flux ionique sur une zone du bord latéral de la première zone semi-conductrice et/ou sur une zone du flanc du masque de gravure. La zone du bord latéral de la première zone semi-conductrice et/ou la zone du flanc du masque de gravure dévie le flux ionique incident. Il en résulte une concentration du flux ionique apparaissant au pied du bord latéral de la première zone semi-conductrice.

Selon un mode de mise en œuvre, l'étape b) est exécutée par une gravure anisotrope, telle qu'une gravure ionique réactive, adaptée pour former le bord latéral de la zone semi-conductrice.

Selon une forme d'exécution, l'étape c) est exécutée par une oxydation thermique du bord latéral.

Ainsi, l'oxydation thermique autorise un contrôle de la largeur de la couche diélectrique formée sur l'épaisseur du bord latéral. En outre, l'oxydation thermique consomme le matériau cristallin s'étendant à partir du bord latéral. Il en résulte que l'oxydation thermique ne nécessite pas de contrainte particulière sur la largeur de la couche d'isolant électrique mise à nu lors de l'étape b). Ainsi, la largeur de la couche d'isolant électrique mise à nu lors de l'étape c) peut être inférieure à la largeur prédéterminée de la couche diélectrique. En revanche, l'oxydation thermique consomme également le matériau cristallin de la couche germe. Il est donc nécessaire de prévoir lors de l'étape b) une épaisseur suffisante pour la couche germe de sorte que l'épaisseur de la couche germe après l'étape c) soit suffisante pour une reprise d'épitaxie.

Selon une variante d'exécution, l'étape c) est exécutée par un dépôt conforme de la couche diélectrique sur le bord latéral, préférentiellement par un dépôt par couche atomique ou par un dépôt chimique en phase vapeur assisté par plasma. De préférence, l'épaisseur de la couche germe est strictement inférieure à 1,5 fois la largeur de la couche d'isolant électrique mise à nu.

Par « conforme », on entend que la couche diélectrique formée conserve la topographie de la surface sur laquelle ladite couche diélectrique a été déposée.

Dans le cas d'un dépôt conforme, le matériau cristallin s'étendant à partir du bord latéral n'est pas consommé. La largeur de la couche d'isolant électrique mise à nu lors de l'étape c) doit être supérieure à la largeur prédéterminée de la couche diélectrique.

La condition géométrique supplémentaire sur l'épaisseur de la couche germe permet d'éviter la formation d'une bulle à l'intérieur de la couche diélectrique pour certains types de dépôt conforme.

Selon un mode de mise en œuvre, l'étape d) comporte une étape de polissage mécano-chimique adapté pour rendre la deuxième région semi-conductrice coplanaire à la couche diélectrique et à la première région semi-conductrice.

Selon une forme d'exécution, la couche semi-conductrice est monocristalline, de préférence à base de silicium monocristallin.

Ainsi, la structure monocristalline de la couche semi-conductrice permet de réduire les pertes optiques relativement à une structure polycristalline par exemple.

Selon une forme d'exécution, la couche semi-conductrice présente une épaisseur égale à l'épaisseur prédéterminée de la couche diélectrique.

Ainsi, une étape de gravure de la couche diélectrique est évitée après la formation de la couche diélectrique sur le bord latéral lors de l'étape c). En outre, une étape d'épitaxie de la première région semi-conductrice est également évitée.

Selon un mode de mise en œuvre, le procédé comporte une étape de dopage électrique des première et deuxième régions semi-conductrices de sorte que le guide optique forme une capacité.

Ainsi, un tel guide optique fabriqué convient tout particulièrement à un modulateur électro-optique de type capacitif.

Selon une forme d'exécution, le rapport entre l'épaisseur et la largeur de la couche diélectrique formée lors de l'étape c) est supérieur à 1,5.

La présente invention concerne également un guide optique susceptible d'être obtenu par un procédé conforme à l'invention lorsque le rapport entre l'épaisseur et la largeur de la couche diélectrique formée lors de l'étape c) est supérieur à 1,5.

Ainsi, un tel guide optique se distingue de l'état de la technique par une largeur de la couche diélectrique uniforme et pouvant être contrôlée, et ce en vue d'une production à l'échelle industrielle.

D'autres caractéristiques et avantages apparaîtront dans la description qui va suivre de deux procédés selon l'invention, donnés à titre d'exemples non limitatifs, en référence aux dessins annexés dans lesquels :
- les figures 1a à 1g comportent des vues schématiques illustrant différentes étapes d'un premier procédé selon l'invention,
- les figures 2a à 2f comportent des vues schématiques illustrant différentes étapes d'un deuxième procédé selon l'invention,
- la figure 3 est un graphique illustrant un profil du champ optique normalisé et centré sur la couche diélectrique appartenant à un guide optique susceptible d'être obtenu par le procédé selon l'invention, l'axe des abscisses étant en microns.

Pour les différents modes de mise en œuvre, les mêmes références seront utilisées pour des éléments identiques ou assurant la même fonction, par souci de simplification de la description.

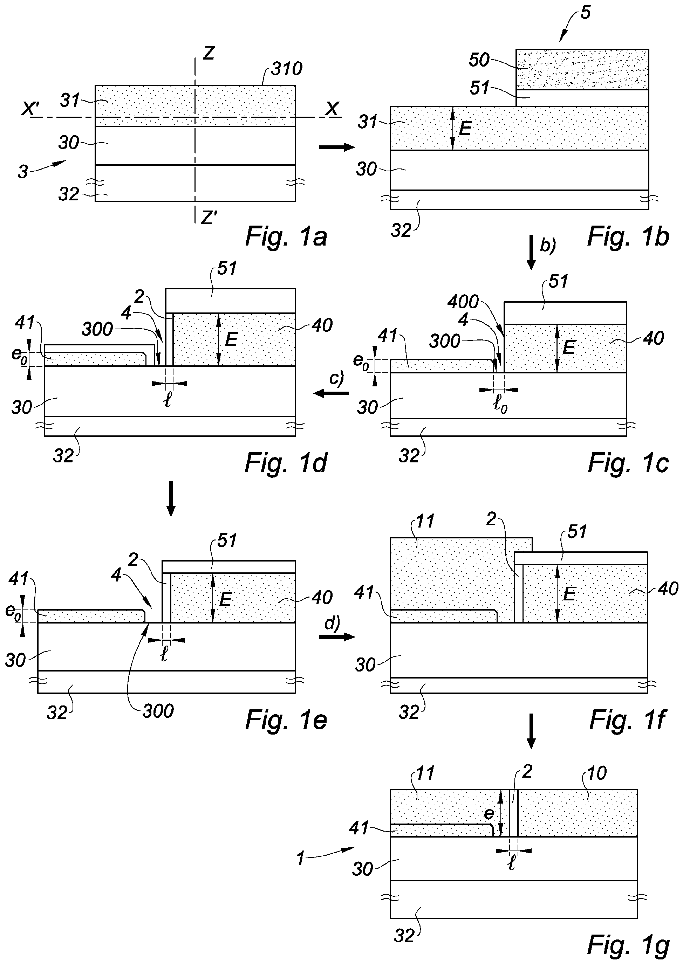

Le premier procédé illustré aux figures 1a à 1g est un procédé de fabrication d'un guide optique 1 comportant deux régions semi-conductrices 10, 11 cristallines séparées par une couche diélectrique 2, tel que représenté figure 1g. Comme visible à la figure 1g, la couche diélectrique 2 présente une largeur l prédéterminée et une épaisseur e prédéterminée strictement supérieure à ladite largeur l ; e > l.

Comme illustré à la figure 1a, le premier procédé comporte une étape a) prévoir un substrat 3 comportant successivement un substrat support 32, une couche d'isolant électrique 30 et une couche semi-conductrice 31 cristalline. Le substrat 3 présente une surface plane 310. La surface plane 310 du substrat 3 correspond à la surface libre de la couche semi-conductrice 31. La couche semi-conductrice 31 présente avantageusement une épaisseur E égale à l'épaisseur e prédéterminée de la couche diélectrique 2.

Par « largeur », on entend une dimension suivant un axe X'-X parallèle au plan défini par la surface plane 310 du substrat 3.

Par « épaisseur », on entend une dimension suivant un axe Z'-Z perpendiculaire à la surface plane 310 du substrat 3.

La couche semi-conductrice 31 est avantageusement monocristalline, de préférence à base de silicium monocristallin.

Comme illustré à la figure 1c, le premier procédé comporte une étape b) former une tranchée 4 dans la couche semi-conductrice 31 de manière à mettre à nu la couche d'isolant électrique 30 et délimiter des première et deuxième zones semi-conductrices 40, 41 de part et d'autre de la couche d'isolant électrique mise à nu 300. L'étape b) comporte une étape préalable illustrée à la figure 1b consistant à agencer un masque de gravure 5 sur la couche semi-conductrice 31 pour protéger la première zone semi-conductrice 40. Le masque de gravure 5 comporte préférentiellement une couche 51 de masque dur agencée sur la couche semi-conductrice 31 et une couche 50 à base de résine photosensible surmontant la couche 51 de masque dur. Toutefois, le masque de gravure 5 peut être formé d'une seule couche 50 à base de résine photosensible ou d'une seule couche 51 de masque dur.

L'étape b) est exécutée de sorte que la première zone semi-conductrice 40 présente un bord latéral 400 s'étendant sur toute l'épaisseur E de la couche semi-conductrice 31 et suivant un axe Z'-Z perpendiculaire à la surface plane 310 du substrat 3.

Par « perpendiculaire », on entend que l'angle formé entre le bord latéral 400 et la surface plane 310 du substrat 3 est compris entre 85° et 95°.

La première zone semi-conductrice 40 est destinée à former la première région semi-conductrice 10 du guide optique 1. La tranchée formée lors de l'étape b) est configurée de sorte que la deuxième zone semi-conductrice 41 forme une couche germe s'étendant sur une épaisseur e₀ strictement inférieure à l'épaisseur E de la couche semi-conductrice 31.

L'étape b) est exécutée par une gravure de la couche semi-conductrice 31 adaptée pour former la couche germe et une partie du bord latéral 400 de la première zone conductrice 40. La gravure comprend une surgravure de la couche semi-conductrice 31 adaptée pour mettre à nu la couche d'isolant électrique 30 et délimiter la couche germe de la première zone semi-conductrice 40. La surgravure termine la formation du bord latéral 400 de la première zone semi-conductrice 40.

La largeur l₀ de la couche d'isolant électrique mise à nu 300 obtenue après l'étape b) est préférentiellement comprise entre 10 nm et 50 nm. L'épaisseur e₀ de la couche germe obtenue après l'étape b) est préférentiellement comprise entre 10 nm et 70 nm.

L'étape b) est avantageusement exécutée par une gravure ionique réactive de la couche semi-conductrice 31 adaptée pour privilégier une gravure anisotrope. La surgravure de la couche semi-conductrice 31 est obtenue par une incidence oblique d'un flux ionique. Par « oblique », on entend une direction qui n'est pas parallèle à l'axe Z'-Z. Plus précisément, la topographie de l'objet gravé conduit à une incidence oblique d'un flux ionique sur une zone du bord latéral 400 de la première zone semi-conductrice 40 et/ou sur une zone du flanc du masque de gravure 5. La zone du bord latéral 400 de la première zone semi-conductrice et/ou la zone du flanc du masque de gravure 5 dévie le flux ionique incident. Il en résulte une concentration du flux ionique apparaissant au pied du bord latéral 400 de la première zone semi-conductrice 40.

La gravure ionique réactive est préférentiellement exécutée à l'intérieur d'une chambre comportant :
- une électrode supérieure couplée à un premier générateur de signaux radiofréquences -RF-, dit générateur supérieur,
- une électrode inférieure couplée à un second générateur de signaux RF, dit générateur inférieur, le substrat 3 étant destiné à reposer sur l'électrode inférieure.

L'anisotropie de la gravure est privilégiée par exemple par le choix de la puissance respective du générateur supérieur et du générateur inférieur, notées Psup et Pinf. Ainsi, le générateur supérieur présente une puissance élevée relativement à la puissance du générateur inférieur, de préférence Psup > 3 Pinf. A titre d'exemple, Pinf < 120 W et Psup > 400 W, préférentiellement Pinf = 100 W et Psup = 500 W. La pression à l'intérieur de la chambre peut être inférieure à 6,7 Pa (50 mTorr), de préférence inférieure à 1,3 Pa (10 mTorr). Les gaz réactifs introduits dans la chambre sont avantageusement choisis dans le groupe comportant Cl₂, HBr, O₂He et CF₄.

La tranchée réalisée par la surgravure peut être obtenue par un ratio Cl₂/HBr élevé et une pression faible à l'intérieur de la chambre. A titre d'exemple, le ratio Cl₂/HBr est avantageusement de l'ordre de 3 :1, et la pression à l'intérieur de la chambre est de l'ordre de 0,5 Pa (4 mTorr). A titre d'exemple, les flux de gaz réactifs (en sccm) pour Cl₂, HBr, O₂He et CF₄ sont respectivement de l'ordre de 150, 50, 5 et 10. La tranchée réalisée par la surgravure présente alors une profondeur de l'ordre de 40 nm, ce qui correspond à l'épaisseur e₀ de la couche germe obtenue après l'étape b). Le rapport entre l'épaisseur e₀ de la couche germe obtenue après l'étape b) et la largeur l₀ de la couche d'isolant électrique mise à nu 300 obtenue après l'étape b) est de l'ordre de 1.

L'épaisseur de la couche 51 de masque dur à graver est prédéterminée notamment en fonction de l'épaisseur E de la couche semi-conductrice 31 et du différentiel de vitesse de gravure entre la couche 51 et la couche semi-conductrice 31.

Comme illustré à la figure 1d, le premier procédé comporte une étape c) former la couche diélectrique 2 de la largeur l prédéterminée sur toute l'épaisseur E du bord latéral 400. L'étape c) est exécutée par une oxydation thermique du bord latéral 400. A titre d'exemple, lorsque la couche semi-conductrice 31 est à base de silicium monocristallin, l'étape c) est exécutée :
- à une température comprise entre 800°C et 1200°C, préférentiellement à 1000°C,
- préférentiellement en présence de vapeur d'eau.

Il en résulte la formation d'une couche diélectrique 2 à base de SiO₂. En outre, une couche de SiO₂ est formée autour de la couche germe 41, comme visible à la figure 1d. Comme visible à la figure 1e, la couche de SiO₂ formée autour de la couche germe 41 est éliminée avant l'étape d) décrite par la suite, de préférence par une gravure anisotrope.

Les connaissances générales de l'homme du métier permettent de déterminer la durée d'exécution de l'étape c) selon la largeur l souhaitée de la couche diélectrique 2.

En outre, l'oxydation thermique consommant également le matériau cristallin de la couche germe, la tranchée formée lors de l'étape b) est préalablement configurée de sorte que l'épaisseur de la couche germe après l'étape c) soit suffisante pour une reprise d'épitaxie.

Selon une variante d'exécution, l'étape c) est exécutée par un dépôt conforme de la couche diélectrique 2 sur le bord latéral 400. Le dépôt conforme est préférentiellement un dépôt par couche atomique -ALD- ou un dépôt chimique en phase vapeur assisté par plasma -PECVD-. A titre d'exemple, lorsque la couche semi-conductrice 31 est à base de silicium monocristallin, l'étape c) est avantageusement exécutée par un dépôt PECVD de SiO₂ à une température comprise entre 350°C et 400°C avec une source en orthosilicate de tétraéthyle -TEOS.

La tranchée formée lors de l'étape b) est alors préalablement configurée de sorte que la deuxième zone semi-conductrice 41 forme une couche germe s'étendant sur une épaisseur e₀ strictement inférieure à 1,5 fois la largeur l₀ de la couche d'isolant électrique mise à nu 300 ; e₀ < 1,5 l₀.

Le premier procédé comporte une étape d) former par épitaxie la deuxième région semi-conductrice 11 du guide optique 1 à partir de la couche germe 41. Avantageusement, l'épitaxie de l'étape d) est sélective de manière à éviter une croissance à partir de la couche d'isolant électrique mise à nu 300. L'étape d) est exécutée après l'étape c).

Comme illustré à la figure 1g, l'étape d) comporte avantageusement une étape de polissage mécano-chimique adapté pour rendre la deuxième région semi-conductrice 11 coplanaire à la couche diélectrique 2 et à la première région semi-conductrice 10. La couche 51 de masque dur permet de protéger la première zone semi-conductrice 40 du polissage mécano-chimique.

Le premier procédé comporte avantageusement une étape (non illustrée) de dopage électrique des première et deuxième régions semi-conductrices 10, 11 de sorte que le guide optique 1 forme une capacité.

Le rapport entre l'épaisseur e et la largeur l de la couche diélectrique 2 du guide optique 1 obtenu est avantageusement supérieur à 1,5. Avantageusement, la largeur l de la couche diélectrique 2 est inférieure ou égale à 50 nm et supérieure ou égale à 5 nm. De préférence, la largeur l de la couche diélectrique 2 est comprise entre 10 nm et 20 nm. Avantageusement, le rapport entre l'épaisseur e et la largeur l de la couche diélectrique 2 est compris entre 17 et 50, de préférence compris entre 20 et 50, encore préférentiellement compris entre 20 et 30.

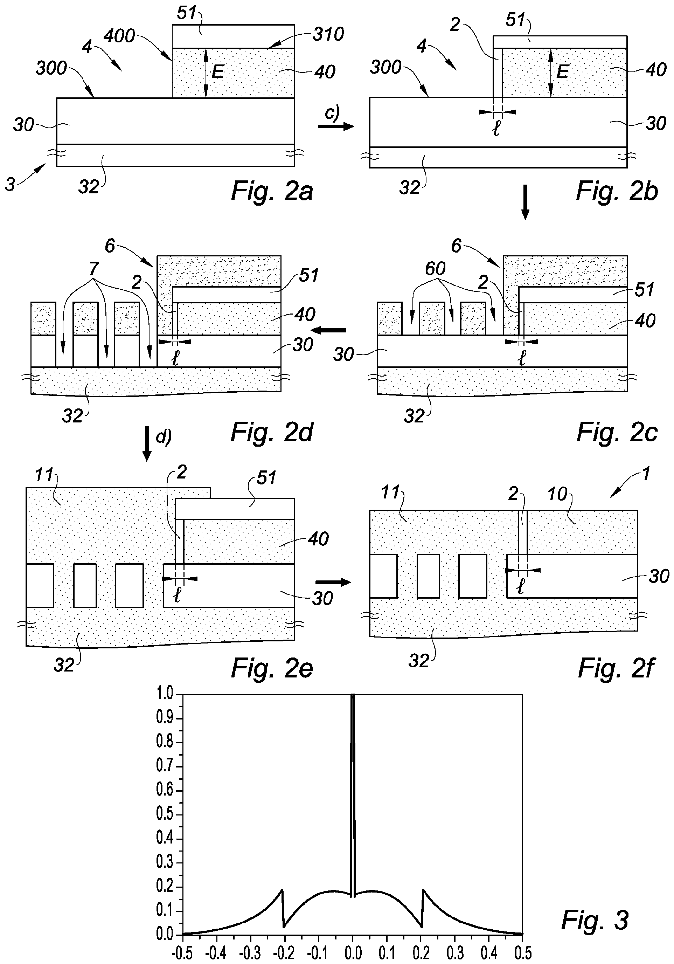

Comme visible à la figure 3, à titre d'exemple avec une largeur l égale à 10 nm et un rapport égal à 22, il est possible de constater que, malgré le fort confinement du champ optique dans la couche diélectrique 2, le recouvrement de la faible fraction du champ optique présente près de la couche diélectrique 2 avec la zone d'accumulation de porteurs de charge demeure suffisante pour assurer le phénomène d'électro-réfraction.

Le deuxième procédé illustré aux figures 2a à 2e est un procédé de fabrication d'un guide optique 1 comportant deux régions semi-conductrices 10, 11 cristallines séparées par une couche diélectrique 2, tel que représenté figure 2f. Comme visible à la figure 2f, la couche diélectrique 2 présente une largeur l prédéterminée et une épaisseur e prédéterminée strictement supérieure à ladite largeur l ; e > l.

Le deuxième procédé comporte une étape a) prévoir un substrat 3 comportant successivement un substrat support 32, une couche d'isolant électrique 30 et une couche semi-conductrice cristalline. Le substrat 3 présente une surface plane 310. Le substrat support 32 est à base d'un matériau semi-conducteur cristallin. Le substrat support 32 est avantageusement monocristallin, de préférence à base de silicium monocristallin. La couche semi-conductrice présente avantageusement une épaisseur E égale à l'épaisseur e prédéterminée de la couche diélectrique 2.

Par « largeur », on entend une dimension suivant un axe X'-X parallèle au plan défini par la surface plane 310 du substrat 3.

Par « épaisseur », on entend une dimension suivant un axe Z'-Z perpendiculaire à la surface plane 310 du substrat 3.

La couche semi-conductrice est avantageusement monocristalline, de préférence à base de silicium monocristallin.

Comme illustré à la figure 2a, le deuxième procédé comporte une étape b) éliminer une partie 4 de la couche semi-conductrice de manière à mettre à nu la couche d'isolant électrique 30 et délimiter une unique zone semi-conductrice 40 d'un côté de la couche d'isolant électrique mise à nu 300. L'étape b) comporte une étape préalable (non illustrée) consistant à agencer un masque de gravure sur la couche semi-conductrice pour protéger la zone semi-conductrice 40. Le masque de gravure comporte préférentiellement une couche 51 de masque dur agencé sur la couche semi-conductrice et une couche à base de résine photosensible surmontant la couche 51 de masque dur.

Comme visible à la figure 2a, l'étape b) est exécutée de sorte que la zone semi-conductrice 40 présente un bord latéral 400 s'étendant sur toute l'épaisseur E de la couche semi-conductrice et suivant un axe perpendiculaire à la surface plane 310 du substrat 3.

Par « perpendiculaire », on entend que l'angle formé entre le bord latéral 400 et la surface plane 310 du substrat 3 est compris entre 85° et 95°.

La zone semi-conductrice 40 est destinée à former la première région semi-conductrice 10 du guide optique 1. L'étape b) est avantageusement exécutée par une gravure anisotrope, telle qu'une gravure au plasma, adaptée pour former le bord latéral 400 de la zone semi-conductrice 40.

Comme illustré à la figure 2b, le deuxième procédé comporte une étape c) former la couche diélectrique 2 de la largeur l prédéterminée sur toute l'épaisseur E du bord latéral 400. L'étape c) est exécutée par une oxydation thermique du bord latéral 400. A titre d'exemple, lorsque la couche semi-conductrice est à base de silicium monocristallin, l'étape c) est exécutée :
- à une température comprise entre 800°C et 1200°C, préférentiellement à 1000°C,
- préférentiellement en présence de vapeur d'eau.

Il en résulte la formation d'une couche diélectrique 2 à base de SiO₂.

Les connaissances générales de l'homme du métier permettent de déterminer la durée d'exécution de l'étape c) selon la largeur l souhaitée de la couche diélectrique 2.

Selon une variante d'exécution, l'étape c) est exécutée par un dépôt conforme de la couche diélectrique 2 sur le bord latéral 400. Le dépôt conforme est préférentiellement un dépôt par couche atomique -ALD- ou un dépôt chimique en phase vapeur assisté par plasma -PECVD-. A titre d'exemple, lorsque la couche semi-conductrice est à base de silicium monocristallin, l'étape c) est avantageusement exécutée par un dépôt PECVD de SiO₂ à une température comprise entre 350°C et 400°C avec une source en orthosilicate de tétraéthyle -TEOS.

Comme illustré à la figure 2c, le deuxième procédé comporte une étape de photolithographie d'une résine 6 délimitant des ouvertures 60 débouchant sur la couche d'isolant électrique mise à nu 300.

Comme illustré à la figure 2d, le deuxième procédé comporte une étape c1) former au moins des tranchées 7 dans la couche d'isolant électrique mise à nu 300 de manière à mettre à nu le substrat support 32. Les tranchées 7 sont formées dans le prolongement des ouvertures 60. L'étape c1) est avantageusement exécutée par une gravure anisotrope, telle qu'une gravure au plasma. La résine 6 est ensuite éliminée.

Comme illustré à la figure 2e, le deuxième procédé comporte une étape d) former par épitaxie la deuxième région semi-conductrice 11 du guide optique 1 à partir du substrat support 32 mis à nu. Avantageusement, l'épitaxie de l'étape d) est sélective de manière à éviter une croissance à partir de la couche d'isolant électrique 30. L'étape d) est exécutée après l'étape c).

Comme illustré à la figure 2f, l'étape d) comporte une étape de polissage mécano-chimique adapté pour rendre la deuxième région semi-conductrice 11 coplanaire à la couche diélectrique 2 et à la première région semi-conductrice 10.

Le deuxième procédé comporte avantageusement une étape (non illustrée) de dopage électrique des première et deuxième régions semi-conductrices 10, 11 de sorte que le guide optique 1 forme une capacité.

Le rapport entre l'épaisseur e et la largeur l de la couche diélectrique 2 du guide optique 1 obtenu est avantageusement supérieur à 1,5. Avantageusement, la largeur l de la couche diélectrique 2 est inférieure ou égale à 50 nm et supérieure ou égale à 5 nm. De préférence, la largeur l de la couche diélectrique 2 est comprise entre 10 nm et 20 nm. Avantageusement, le rapport entre l'épaisseur e et la largeur l de la couche diélectrique 2 est compris entre 17 et 50, de préférence compris entre 20 et 50, encore préférentiellement compris entre 20 et 30.

Comme visible à la figure 3, à titre d'exemple avec une largeur l égale à 10 nm et un rapport égal à 22, il est possible de constater que, malgré le fort confinement du champ optique dans la couche diélectrique 2, le recouvrement de la faible fraction du champ optique présente près de la couche diélectrique 2 avec la zone d'accumulation de porteurs de charge demeure suffisante pour assurer le phénomène d'électro-réfraction.

## Revendications

1. Procédé de fabrication d'un guide optique (1) comportant deux régions semi-conductrices (10, 11) cristallines séparées par une couche diélectrique (2), la couche diélectrique (2) présentant une largeur (l) prédéterminée et une épaisseur (e) prédéterminée strictement supérieure à ladite largeur (l), le procédé comportant les étapes : a) prévoir un substrat (3) comportant successivement une couche d'isolant électrique (30) et une couche semi-conductrice (31) cristalline, le substrat (3) présentant une surface plane (310), b) former une tranchée (4) dans la couche semi-conductrice (31) de manière à mettre à nu la couche d'isolant électrique (30) et délimiter des première et deuxième zones semi-conductrices (40, 41) de part et d'autre de la couche d'isolant électrique mise à nu (300), l'étape b) étant exécutée de sorte que la première zone semi-conductrice (40) présente un bord latéral (400) s'étendant sur toute l'épaisseur (E) de la couche semi-conductrice (31) et suivant un axe (Z'-Z) perpendiculaire à la surface plane (310) du substrat (3), la première zone semi-conductrice (40) étant destinée à former la première région semi-conductrice (10) du guide optique (1), c) former la couche diélectrique (2) de la largeur (l) prédéterminée sur toute l'épaisseur du bord latéral (400), le procédé étant **caractérisé en ce que** la tranchée formée lors de l'étape b) est configurée de sorte que la deuxième zone semi-conductrice (41) forme une couche germe s'étendant sur une épaisseur (e₀) strictement inférieure à l'épaisseur (E) de la couche semi-conductrice (31), et **en ce qu'**il comporte une étape d) former par épitaxie la deuxième région semi-conductrice (11) du guide optique (1) à partir de la couche germe (41), l'étape d) étant exécutée après l'étape c).

2. Procédé de fabrication d'un guide optique (1) comportant deux régions semi-conductrices (10, 11) cristallines séparées par une couche diélectrique (2), la couche diélectrique (2) présentant une largeur (l) prédéterminée et une épaisseur (e) prédéterminée strictement supérieure à ladite largeur (l), le procédé comportant les étapes : a) prévoir un substrat (3) comportant successivement une couche d'isolant électrique (30) et une couche semi-conductrice cristalline, le substrat (3) présentant une surface plane (310), le substrat (3) étant à base d'un matériau semi-conducteur cristallin, b) éliminer une partie de la couche semi-conductrice de manière à mettre à nu la couche d'isolant électrique (30) et délimiter une unique zone semi-conductrice (40) d'un côté de la couche d'isolant électrique mise à nu (300), l'étape b) étant exécutée de sorte que la zone semi-conductrice (40) présente un bord latéral (400) s'étendant sur toute l'épaisseur (E) de la couche semi-conductrice et suivant un axe perpendiculaire à la surface plane (310) du substrat (3), la zone semi-conductrice (40) étant destinée à former la première région semi-conductrice (10) du guide optique (1), c) former la couche diélectrique (2) de la largeur (l) prédéterminée sur toute l'épaisseur du bord latéral (400), **caractérisé en ce qu'**il comporte des étapes c1) former au moins une tranchée (7) dans la couche d'isolant électrique mise à nu (300) de manière à mettre à nu le substrat (3), et d) former par épitaxie la deuxième région semi-conductrice (11) du guide optique (1) à partir du substrat (3) mis à nu, l'étape d) étant exécutée après l'étape c1).

3. Procédé selon la revendication 1, **caractérisé en ce que** l'étape b) est exécutée par une gravure de la couche semi-conductrice (31)adaptée pour former la couche germe et une partie du bord latéral (400) de la première zone semi-conductrice (40), ladite gravure comprenant une surgravure de la couche semi-conductrice (31) adaptée pour mettre à nu la couche d'isolant électrique (30) et délimiter la couche germe de la première zone semi-conductrice (40), la surgravure terminant la formation du bord latéral (400) de la première zone semi-conductrice (40).

4. Procédé selon la revendication 3, **caractérisé en ce que** la gravure de la couche semi-conductrice (31) est une gravure ionique réactive adaptée pour privilégier une gravure anisotrope, la surgravure de la couche semi-conductrice (31) étant obtenue par une incidence oblique d'un flux ionique.

5. Procédé selon la revendication 2, **caractérisé en ce que** l'étape b) est exécutée par une gravure anisotrope, telle qu'une gravure ionique réactive, adaptée pour former le bord latéral (400) de la zone semi-conductrice (40).

6. Procédé selon l'une des revendications 1 à 5, **caractérisé en ce que** l'étape c) est exécutée par une oxydation thermique du bord latéral (400).

7. Procédé selon l'une des revendications 1 à 5, **caractérisé en ce que** l'étape c) est exécutée par un dépôt conforme de la couche diélectrique (2) sur le bord latéral (400), préférentiellement par un dépôt par couche atomique ou par un dépôt chimique en phase vapeur assisté par plasma.

8. Procédé selon l'une des revendications 1 à 7, **caractérisé en ce que** l'étape d) comporte une étape de polissage mécano-chimique adapté pour rendre la deuxième région semi-conductrice (11) coplanaire à la couche diélectrique (2) et à la première région semi-conductrice (10).

9. Procédé selon l'une des revendications 1 à 8, **caractérisé en ce que** la couche semi-conductrice (31) est monocristalline, de préférence à base de silicium monocristallin.

10. Procédé selon l'une des revendications 1 à 9, **caractérisé en ce que** la couche semi-conductrice (31) présente une épaisseur (E) égale à l'épaisseur (e) prédéterminée de la couche diélectrique (2).

11. Procédé selon l'une des revendications 1 à 10, **caractérisé en ce qu'**il comporte une étape de dopage électrique des première et deuxième régions semi-conductrices (10, 11) de sorte que le guide optique (1) forme une capacité.

12. Procédé selon l'une des revendications 1 à 11, **caractérisé en ce que** le rapport entre l'épaisseur (e) et la largeur (l) de la couche diélectrique (2) formée lors de l'étape c) est supérieur à 1,5.

## Patentansprüche

1. Verfahren zum Herstellen eines optischen Leiters (1), umfassend zwei kristalline Halbleiterbereiche (10, 11), die durch eine dielektrische Schicht (2) getrennt sind, wobei die dielektrische Schicht (2) eine vorbestimmte Breite (I) und eine vorbestimmte Dicke (e) aufweist, die deutlich größer als die Breite (I) ist, wobei das Verfahren die Schritte aufweist: a) Bereitstellen eines Substrates (3), umfassend nacheinander eine Schicht elektrischer Isolierung (30) und eine kristalline Halbleiterschicht (31), wobei das Substrat (3) eine flache Oberfläche (310) aufweist, b) Bilden eines Grabens (4) in der Halbleiterschicht (31), derart, um die Schicht elektrischer Isolierung (30) freizulegen und eine erste und eine zweite Halbleiterzone (40, 41) auf beiden Seiten der freigelegten Schicht elektrischer Isolierung (300) zu begrenzen, wobei der Schritt b) derart ausgeführt wird, dass die erste Halbleiterzone (40) einen Seitenrand (400) aufweist, der sich über die gesamte Dicke (E) der Halbleiterschicht (31) und entlang einer Achse (Z'-Z), die senkrecht zu der flachen Oberfläche (310) des Substrats (3) ist, erstreckt, wobei die erste Halbleiterzone (40) dazu bestimmt ist, den ersten Halbleiterbereich (10) des optischen Leiters (1) zu bilden, c) Bilden der dielektrischen Schicht (2) der vorbestimmten Breite (I) auf der gesamten Dicke des Seitenrands (400), wobei das Verfahren **dadurch gekennzeichnet ist, dass** der Graben, der während des Schrittes b) gebildet wird, derart konfiguriert ist, dass die zweite Halbleiterzone (41) eine Keimschicht bildet, die sich über eine Dicke (eo) erstreckt, die deutlich kleiner als die Breite (E) der Halbleiterschicht (31) ist, und dadurch, dass es einen Schritt d) des Bildens durch Epitaxie des zweiten Halbleiterbereichs (11) des optischen Leiters (1) ausgehend von der Keimschicht (41) aufweist, wobei der Schritt d) nach dem Schritt c) durchgeführt wird.

2. Verfahren zum Herstellen eines optischen Leiters (1), umfassend zwei kristalline Halbleiterbereiche (10, 11), die durch eine dielektrische Schicht (2) getrennt sind, wobei die dielektrische Schicht (2) eine vorbestimmte Breite (I) und eine vorbestimmte Dicke (e) aufweist, die deutlich größer als die Breite (I) ist, wobei das Verfahren die Schritte aufweist:
a) Bereitstellen eines Substrates (3), umfassend nacheinander eine Schicht elektrischer Isolierung (30) und eine kristalline Halbleiterschicht, wobei das Substrat (3) eine flache Oberfläche (310) aufweist, wobei das Substrat (3) auf Basis eines kristallinen Halbleitermaterials ist,
b) Entfernen eines Teils der Halbleiterschicht, derart, um die Schicht elektrischer Isolierung (30) freizulegen und eine einzige Halbleiterzone (40) auf einer Seite der freigelegten Schicht elektrischer Isolierung (300) zu begrenzen, wobei der Schritt b) derart ausgeführt wird, dass die Halbleiterzone (40) einen Seitenrand (400) aufweist, der sich über die gesamte Dicke (E) der Halbleiterschicht und entlang einer Achse, die senkrecht zu der flachen Oberfläche (310) des Substrats (3) ist, erstreckt, wobei die Halbleiterzone (40) dazu bestimmt ist, den ersten Halbleiterbereich (10) des optischen Leiters (1) zu bilden,
c) Bilden der dielektrischen Schicht (2) der vorbestimmten Breite (I) auf der gesamten Dicke des Seitenrands (400), **dadurch gekennzeichnet, dass** es Schritte c1) des Bildens mindestens eines Grabens (7) in der freigelegten Schicht elektrischer Isolierung (300), derart, um das Substrat (3) freizulegen, und
d) des Bildens durch Epitaxie des zweiten Halbleiterbereichs (11) des optischen Leiters (1) ausgehend von dem freigelegten Substrat (3) aufweist, wobei der Schritt d) nach dem Schritt c1) durchgeführt wird.

3. Verfahren nach Anspruch 1, **dadurch gekennzeichnet, dass** der Schritt b) durch ein Ätzen der Halbleiterschicht (31) durchgeführt wird, das geeignet ist, um die Keimschicht und einen Teil des Seitenrands (400) der ersten Halbleiterzone (40) zu bilden, wobei das Ätzen ein Überätzen der Halbleiterschicht (31) aufweist, das geeignet ist, um die Schicht elektrischer Isolierung (30) freizulegen und die Keimschicht der ersten Halbleiterzone (40) zu begrenzen, wobei das Überätzen das Bilden des Seitenrands (400) der ersten Halbleiterzone (40) beendet.

4. Verfahren nach Anspruch 3, **dadurch gekennzeichnet, dass** das Ätzen der Halbleiterschicht (31) ein reaktives Ionenätzen ist, das geeignet ist, um ein anisotropes Ätzen zu bevorzugen, wobei das Überätzen der Halbleiterschicht (31) durch einen schrägen Einfall eines Ionenflusses erhalten wird.

5. Verfahren nach Anspruch 2, **dadurch gekennzeichnet, dass** der Schritt b) durch ein anisotropes Ätzen, wie ein reaktives Ionenätzen, ausgeführt wird, das geeignet ist, um den Seitenrand (400) der Halbleiterzone (40) zu bilden.

6. Verfahren nach einem der Ansprüche 1 bis 5, **dadurch gekennzeichnet, dass** der Schritt c) durch eine thermische Oxidation des Seitenrands (400) ausgeführt wird.

7. Verfahren nach einem der Ansprüche 1 bis 5, **dadurch gekennzeichnet, dass** der Schritt c) durch eine konforme Abscheidung der dielektrischen Schicht (2) auf dem Seitenrand (400), vorzugsweise durch eine Atomschichtabscheidung oder durch eine plasmaunterstützte chemische Dampfabscheidung, ausgeführt wird.

8. Verfahren nach einem der Ansprüche 1 bis 7, **dadurch gekennzeichnet, dass** der Schritt d) einen Schritt des mechanisch-chemischen Polierens aufweist, das geeignet ist, um den zweiten Halbleiterbereich (11) koplanar zu der dielektrischen Schicht (2) und zu dem ersten Halbleiterbereich (10) zu machen.

9. Verfahren nach einem der Ansprüche 1 bis 8, **dadurch gekennzeichnet, dass** die Halbleiterschicht (31) monokristallin, vorzugsweise auf Basis von monokristallinem Silizium, ist.

10. Verfahren nach einem der Ansprüche 1 bis 9, **dadurch gekennzeichnet, dass** die Halbleiterschicht (31) eine Dicke (E) aufweist, die gleich der vorbestimmten Dicke (e) der dielektrischen Schicht (2) ist.

11. Verfahren nach einem der Ansprüche 1 bis 10, **dadurch gekennzeichnet, dass** es einen Schritt des elektrischen Dotierens des ersten und des zweiten Halbleiterbereichs (10, 11) derart aufweist, dass der optische Leiter (1) einen Kondensator bildet.

12. Verfahren nach einem der Ansprüche 1 bis 11, **dadurch gekennzeichnet, dass** das Verhältnis zwischen der Dicke (e) und der Breite (I) der dielektrischen Schicht (2), die bei dem Schritt c) gebildet wird, größer als 1,5 ist.

## Claims

1. Method of manufacturing an optical waveguide (1) comprising two crystalline semiconductor regions (10, 11) separated by a dielectric layer (2), the dielectric layer (2) having a predetermined width (I) and a predetermined thickness (e) greater than said width (I), the method comprising the steps of : a) providing a substrate (3) successively comprising an electric insulator layer (30) and a crystalline semiconductor layer (31), the substrate (3) having a planar surface (310), b) forming a trench (4) in the semiconductor layer (31) to expose the electric insulator layer (30) and delineate first and second semiconductor areas (40, 41) on either side of the exposed electric insulator layer (300), step b) being executed so that the first semiconductor area (40) has a lateral edge (400) extending across the entire thickness (E) of the semiconductor layer (31) and along an axis (Z-Z') perpendicular to the planar surface (310) of the substrate (3), the first semiconductor area (40) being intended to form the first semiconductor region (10) of the optical waveguide (1), c) forming the dielectric layer (2) with the predetermined width (I) across the entire thickness of the lateral edge (400), the method being **characterized in that** the trench formed at step b) is configured so that the second semiconductor area (41) forms a seed layer extending across a thickness (eo) strictly smaller than the thickness (E) of the semiconductor layer (31), and **in that** it comprises a step d) of forming by epitaxy the second semiconductor region (11) of the optical waveguide (1) from the seed layer (41), step d) being executed after step c).

2. Method of manufacturing an optical waveguide (1) comprising two crystalline semiconductor regions (10, 11) separated by a dielectric layer (2), the dielectric layer (2) having a predetermined width (I) and a predetermined thickness (e) strictly greater than said width (I), the method comprising the steps of : a) providing a substrate (3) successively comprising an electric insulator layer (30) and a crystalline semiconductor layer, the substrate (3) having a planar surface (310), the substrate (3) being based on a crystalline semiconductor material, b) removing a portion of the semiconductor layer to expose the electric insulator layer (30) and delineate a single semiconductor area (40) on one side of the exposed electric insulator layer (300), step b) being executed so that the semiconductor area (40) has a lateral edge (400) extending across the entire thickness (E) of the semiconductor layer and along an axis perpendicular to the planar surface (310) of the substrate (3), the semiconductor area (40) being intended to form the first semiconductor region (10) of the optical waveguide (1), c) forming the dielectric layer (2) with the predetermined width (I) across the entire thickness of the lateral edge (400), **characterized in that** it comprises steps c1) forming at least one trench (7) in the exposed electric insulator layer (300) to expose the substrate (3) and, d) forming by epitaxy the second semiconductor region (11) of the optical waveguide (1) from the exposed substrate (3), step d) being executed after step c1).

3. Method according to claim 1, **characterized in that** step b) is executed by an etching of the semiconductor layer (31) capable of forming the seed layer and a portion of the lateral edge (400) of the first semiconductor area (40), said etching comprising an overetching of the semiconductor layer (31) capable of exposing the electric insulator layer (30) and defining the seed layer of the first semiconductor area (40), the overetching ending the forming of the lateral edge (400) of the first semiconductor area (40).

4. Method according to claim 3, **characterized in that** the etching of the semiconductor layer (31) is a reactive ion etching capable of favoring an anisotropic etching, the overetching of the semiconductor layer (31) being obtained by an oblique incidence of an ion flow.

5. Method according to claim 2, **characterized in that** step b) is executed by an anisotropic etching, such as a reactive ion etching, capable of forming the lateral edge (400) of the semiconductor area (40).

6. Method according to any of claims 1 to 5, **characterized in that** step c) is executed by a thermal oxidation of the lateral edge (400).

7. Method according to any of claims 1 to 5, **characterized in that** step c) is executed by conformal deposition of the dielectric layer (2) on the lateral edge (400), preferably by atomic layer deposition or by plasma-enhanced chemical vapor deposition.

8. Method according to any of claims 1 to 7, **characterized in that** step d) comprises a chemical mechinal polishing step capable of making the second semiconductor region (11) coplanar with the dielectric layer (2) and with the first semiconductor region (10).

9. Method according to any of claims 1 to 8, **characterized in that** the semiconductor layer (31) is a single-crystal layer, preferably based on single-crystal silicon.

10. Method of any of claims 1 to 9, **characterized in that** the semiconductor layer (31) has a thickness (E) equal to the predetermined thickness (e) of the dielectric layer (2).

11. Method according to any of claims 1 to 10, **characterized in that** it comprises a step of electrically doping the first and second semiconductor regions (10, 11) so that the optical waveguide (1) forms a capacitance.

12. Method according to any of claims 1 to 11, **characterized in that** the ratio of the thickness (e) to the width (I) of the dielectric layer (2) formed at step c) is greater than 1.5.
